(19) **Europäisches Patentamt**
**European Patent Office**
**Office européen des brevets**

(11) **EP 2 618 334 B1**

(12) **EUROPEAN PATENT SPECIFICATION**

(45) Date of publication and mention
of the grant of the patent:
**25.11.2015 Bulletin 2015/48**

(51) Int Cl.:
**G21C 17/10** *(2006.01)*    **G21C 17/108** *(2006.01)*

(21) Application number: **12155111.3**

(22) Date of filing: **13.02.2012**

(54) **Travelling reactor power monitoring system and method for driving a travelling probe**

System mit verfahrbarer Sonde zur Leistungsüberwachung eines Reaktors und Verfahren zum Verfahren der Sonde

Système de surveillance de la puissance d'un réacteur par une sonde de déplacement et procédé de commande d'une sonde de déplacement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2012 JP 2012008416**

(43) Date of publication of application:
**24.07.2013 Bulletin 2013/30**

(73) Proprietor: **Kabushiki Kaisha Toshiba
Minato-ku
Tokyo (JP)**

(72) Inventors:
• **Shijo, Toru**
  **MINATO-KU, TOKYO (JP)**
• **Yanagisawa, Masataka**
  **MINATO-KU, TOKYO (JP)**
• **Miyazaki, Tadashi**
  **MINATO-KU, TOKYO (JP)**

(74) Representative: **Delumeau, François Guy et al
Cabinet Beau de Loménie
158, rue de l'Université
75340 Paris Cedex 07 (FR)**

(56) References cited:
**JP-A- 2006 145 417**

**Description**

<u>Cross-Reference to Related Application</u>

This application is based upon and claims the benefit of priority from Japanese Patent Application No. 2012-008416, filed on January 18, 2012

<u>Field of the Invention</u>

The present invention relates to traveling reactor power monitoring system that moves a traveling probe in a nuclear reactor by feeding and spooling a probe cable in the reactor. More particularly, the invention is directed to a traveling reactor power monitoring system that moves the traveling probe at optimized drive speeds.

<u>Background of the invention</u>

At a Boiled Water Reactor (BWR) power plant, in order to measure neutron flux in a nuclear reactor, Local Power Range Monitors (LPRMs) are provided in the reactor. Fissile material provided at the electrode in the LPRMs fissions and releases ionized atoms as a result of being irradiated with neutrons. Neutron flux is obtained by measuring the ionized atoms.

However, the LPRMs are placed in the reactor constantly and difficult to be replaced, and the sensitivity of the LPRMs declines with time because of consumption of the fissile material. Therefore, the sensitivity of the LPRMs needs to be calibrated arbitrarily in order to measure neutron flux in the reactor precisely.

At a Pressurized Water Reactor (PWR) power plant, in order to measure neutron flux in a nuclear reactor, fixed neutron sensors are provided at the outer periphery of the reactor. But the sensitivity of these fixed neutron sensors also declines with time and needs to be calibrated arbitrarily.

In order to calibrate the sensitivity of the LPRMs of BWR and fixed neutron sensors of PWR, a traveling reactor power monitoring system is provided in the nuclear power plant. Generally, the traveling reactor power monitoring system in the BWR is called a Traversing In-core Probe (TIP) monitoring system.

This TIP monitoring system moves a traveling probe that is called a TIP in guide tubes provided in the reactor, and the TIP measures neutron flux in the proximity of the LPRMs while moving. By using measured neutron flux, the sensitivity of the LPRMs is calibrated.

At a PWR power plant, the traveling reactor power monitoring system moves a traveling probe in the reactor, and the sensitivity of the fixed neutron sensors is calibrated by using measured neutron flux by the traveling probe.

The traveling probe is attached to an edge of a probe cable, and the traveling probe moves in the guide tubes by feeding the probe cable from a storage reel and spooling the probe cable onto the storage reel by a motor. This traveling probe measures radioactivity such as neutron and gamma ray as reactor power during moving in the reactor core.

At this point, the shape of each guide tube is curved so as to introduce the traveling probe into the reactor core from outside of the reactor pressure vessel. Therefore, in order to reduce the friction while the traveling probe and the probe cable move in the guide tube, the inside of the guide tubes is coated with lubricant.

But when the drive torque that is a torque necessary for moving the traveling probe and the probe cable exceeds the appropriate value, there is a possibility of damaging the guide tube, the traveling probe and the probe cable by excessive friction. Therefore, it is necessary to monitor the friction inside of the guide tubes by measuring the drive torque.

Therefore, Japanese Patent Laid-open Publication No. 2002-71483 discloses a traveling reactor power monitoring system having a torque sensor attached to the motor shaft. And this torque sensor measures the drive torque automatically.

The above mentioned traveling reactor power monitoring system sets threshold for monitoring the friction as the constant value on the basis of the drive torque at the end point of the guide tube. But the drive torque increases according to the insert distance into the guide tube because the contact area of probe cable and the guide tube increase. Additionally, the drive torque is proportionate to the drive speed of the traveling probe.

Thus, above mentioned traveling reactor power monitoring system is not able to set appropriate drive speed corresponding to appropriate drive torque at each insert position. As the result, there is a possibility that an abnormal friction is caused by moving the traveling probe at excessively fast drive speed. And there is also a possibility that prolonged time of neutron monitoring is taken by moving the TIP at excessively slow drive speed.

Also JP2006-145417 discloses a traversing in-core probe drive unit.

**SUMMARY OF THE INVENTION**

The present invention provides a traveling reactor power monitoring system according to claim 1 and a method of monitoring nuclear reactor power according to claim 9.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

## BRIEF DESCRIPTION OF THE DRAWINGS

The accompanying drawing, which is incorporated in and constitute a part of the specification, illustrates an embodiment of the invention and together with the description, serve to explain the principles of the invention.

Figure 1 is a block schematic diagram illustrating a TIP monitoring system according to a first embodiment of the invention.

Figure 2 is a graphic representation illustrating how to compare the previous drive torque and threshols1, 2 according to the first embodiment of the invention.

Figure 3 is a graphic representation illustrating how to set the scheduled drive speed according to the first embodiment of the invention.

Figure 4 is a graphic representation illustrating how to compare the previous drive torque and aimed torque curve according to a embodiment of the invention.

Figure 5 is a graphic representation illustrating how to set the scheduled drive speed according to the second embodiment of the invention.

Figure 6 is a block schematic diagram illustrating a TIP monitoring system according to a third embodiment of the invention.

## DESCRIPTION OF THE EMBODIMENTS

[First embodiment]

Reference will now be made in detail to the present embodiment of the invention, an example of which is illustrated in the accompanying drawing. Wherever possible, the same reference numbers will be used throughout the drawing to refer to the same or like parts.

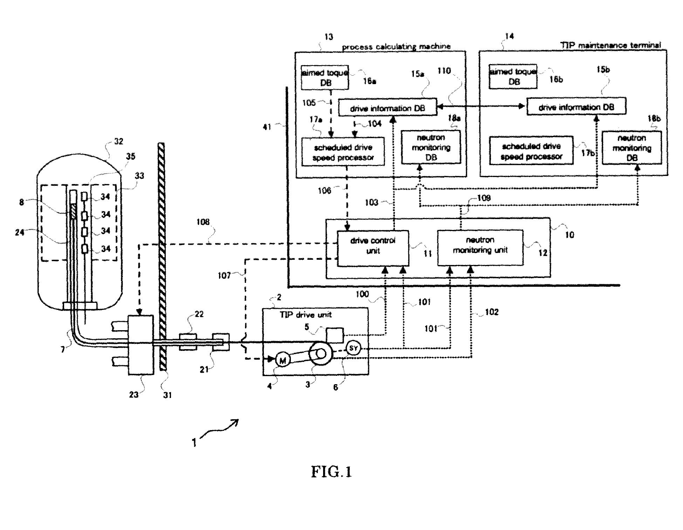

FIG.1 shows a general Boiled Water Reactor (BWR) power plant. At BWR power plant, the traveling reactor power monitoring system is called a Traversing In-core Prove (TIP) monitoring system 1. And TIP monitoring system 1 moves a traveling probe that is called a TIP 8 in order to measure neutron flux in the reactor core.

Referring to FIG. 1 of the drawing, in a reactor container 31, a reactor pressure vessel 32 is stabilized. A reactor core 33 is a portion where the fission fuel is loaded in the reactor pressure vessel 32. A number of LPRMs 34 are provided in the reactor core 33. A number of guide tubes 24 are provided near the LPRMs 34 (Fig.1 shows one of the number of guide tubes 24.).

A TIP monitoring system 1 includes a TIP drive unit 2, a probe cable 7, a TIP 8, a drive / monitor device 10, a process calculating machine 13 and a TIP maintenance terminal 14. The TIP drive unit 2 has a storage reel 3, a motor 4, a torque sensor 5 and a probe position signal generator 6.

The drive / monitor device 10, the process calculating machine 13 and the TIP maintenance terminal 14 are provided in a central monitoring room 41. The drive / monitor device 10 has a drive control unit 11 and a neutron monitoring unit 12. The process calculating machine 13 has a drive information data base (DB) 15a, an aimed torque DB 16a, a scheduled drive speed processor 17a and a neutron monitoring DB 18a. The TIP maintenance terminal 14 also has a drive information data base (DB) 15b, an aimed torque DB 16b, a scheduled drive speed processor 17b and a neutron monitoring DB 18b.

The process calculating machine 13 has a primary function that monitor the power plant condition by receiving the signal from the sensors provided in the power plant (not shown). And the TIP maintenance terminal 14 has a primary function that monitor the condition of the TIP monitoring system 1, and display and maintenance the abnormal condition (not shown).

As shown FIG. 1, the TIP drive unit 2 is provided outside of the reactor container 31. One edge of the probe cable 7 is connected to the TIP 8, and the storage reel 3 may store the probe cable 7. The motor 4 is provided so as to feed the probe cable 7 from the storage reel 3 and spool the probe cable 7 onto the storage reel 3 by rotating the storage reel 3. Furthermore, the torque sensor 5 is provided so as to measure the drive torque that is a torque necessary for moving the TIP 8 and the probe cable 7 in the guide tubes 24 by the motor 4.

The probe position signal generator 6 is provided so as to monitor the length of spooling the prove cable 7 onto the reel 3. The probe position signal generator 6 may send the monitored cable length as the probe position signal 101.

Moreover, the drive control unit 11 is connected to the motor 4 and the indexing device 23 so as to send a drive command 107 to the motor 4 and send an indexing command 108 to the indexing device 23. Furthermore, the drive control unit 11 is connected to the torque sensor 5 and the probe position signal generator 6 so as to receive drive torque information 100 from the torque sensor 5 and receive a probe position signal 101 from the probe position signal generator 6.

The TIP 8 may send a probe output signal 102 that indicates the measured neutron flux through a signal transmitting line in the probe cable 7. The TIP 8 is connected to the neutron monitoring unit 12 so as to send the probe output signal 102 to the neutron monitoring unit 12 through the probe cable 7. Additionally, the neutron monitoring unit 12 is connected to the probe position signal generator 6 so as to receive a probe position signal 101 from the probe position signal generator 6.

A shielding vessel 21 is provided outside of the reactor container 31. The shielding vessel 21 may store and keeps the TIP 8 within. A valve assembly 22 is provided outside of the reactor container 31 and inside of the shielding vessel 21. And an indexing device 23 is provided in the reactor container 31. The shielding vessel 21, the valve assembly 22 and the indexing device 23 are communicated by a pipe so as to move the TIP 8 to the indexing device 23 from the shielding vessel 21 through the valve assembly 22.

The valve assembly 22 has a gas valve purging gas in the guide tubes 24 and a cutting valve cutting the pipe at emergency situation. Furthermore, the valve assembly 22 closes the pipe without neutron monitoring.

The guide tubes 24 are connected to the indexing device 23. Each guide tube 24 extends to the under the reactor pressure vessel 32, and curves upwards. Furthermore, each guide tube 24 penetrates the bottom of the reactor pressure vessel 32, and extends vertically into the reactor core 33.

In the central monitoring room 41, the drive control unit 11 is connected to the scheduled drive speed processor 17a, 17b so as to receive a scheduled drive speed information 106 from the scheduled drive speed processor 17a or 17b. Furthermore, the drive control unit 11 is connected to the drive information DB 15a, 15b so as to send a current drive information 103 to drive information DB 15a or 15b.

The scheduled drive speed processor 17a, 17b are connected to the drive information DB 15a, 15b respectively so as to receive a previous drive information 104. Additionally, the scheduled drive speed processor 17a, 17b are connected to the aimed torque DB 16a, 16b respectively so as to receive an aimed torque information 105.

The neutron monitoring unit 12 is connected to neutron monitoring DB 18a, 18b so as to send a neutron monitoring information 109 to the neutron monitoring DB 18a or 18b.

Additionally, the drive information DB 15a is connected to the drive information DB 15b so as to send and receive a synchronizing signal 110 with respect to one another.

At first, measuring neutron flux is described as follows. Calculating the scheduled drive speed is described later. In this embodiment, any one of the process calculating machine 13 and the TIP maintenance terminal 14 may measures neutron flux and calculates the scheduled drive speed. The case that the process calculating machine 13 is used is described below.

Ordinary, the TIP 8 is stored in the shielding vessel 21. At the time of measurement of neutron flux, the drive control unit 11 receives the scheduled drive speed information 106 from the scheduled drive speed processor 17a. The scheduled drive speed information 106 indicates the scheduled drive speed that specifies the drive speed of TIP 8 at each insert position in each guide tube 24.

The drive control unit 11 sends the drive command 107 to the motor 4. The motor 4 feeds the probe cable 7 from the storage reel 3, and moves the TIP 8 to the indexing device 23 from the shielding vessel 21. Furthermore, the drive control unit 11 sends indexing command 108 to the indexing device 23. The indexing device 23 indexes the TIP 8 to the guide tube 24 designated to measure neutron flux indicated in the indexing command 108.

The drive control unit 11 further drives the motor 4 and insert the TIP 8 into the guide tube 24. The drive control unit 11 receives the probe position signal 101 from the probe position signal generator 6, and recognizes the insert position of the TIP 8 in the guide tube 24. At each insert position, the drive control unit 11 moves TIP 8 at the drive speed that the scheduled drive speed information 106 indicates.

The TIP 8 measures neutron flux as reactor power at the predefined point during moving in the guide tube 24, and sends the probe output signal 102 to the neutron monitoring unit 12 through the probe cable 7. And the neutron monitoring unit 12 receives the probe position signal 101 from the probe position signal generator 6.

The neutron monitoring unit 12 sends the measured neutron flux at each predefined point as the neutron flux information 109 to the neutron monitoring DB 18a by using the probe output signal 102 and the probe position signal 101. This neutron flux information 109 is memorized in the neutron monitoring DB 18a and used for the calibration of the sensitivity of the LPRMs 34.

After moving the TIP 8 to the predefined end point of the guide tube 24, the motor control unit 11 reverses motor 4 and spools the probe cable 7 onto the storage reel 4, and moves the TIP 8 back to the indexing device 23. If it is necessary to measure neutron flux in another guide tube 24, the motor control unit 11 sends the indexing command 108 to the indexing device 23, and the indexing device 23 indexes the TIP 8 to the other guide tube 24, and the motor control unit 11 moves the TIP 8 in other guide tube 24.

After moving the TIP 8 in all designated guide tube 24, the motor control unit 11 spools the probe cable 7 onto the storage reel 3 and store the TIP 8 in the shielding vessel 21.

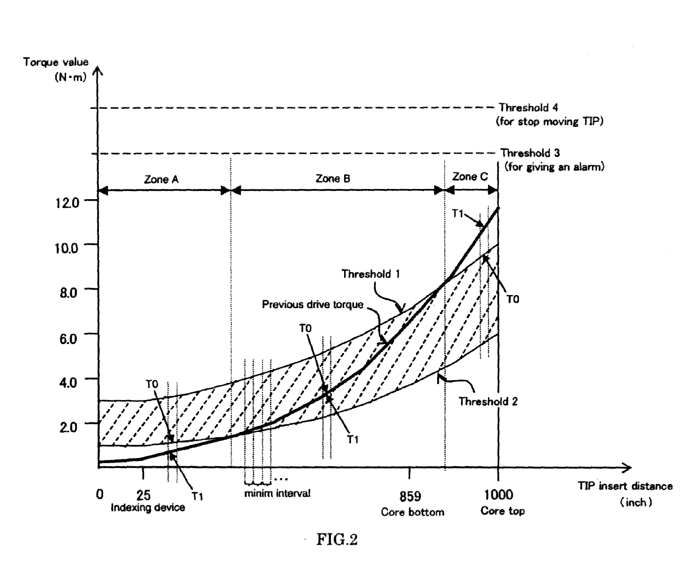

Next, calculating the scheduled drive speed of the TIP 8 is described as follows. As shown FIG. 2, threshold 1 is used for decreasing the drive speed, and threshold 2 is used for increasing the drive speed. Threshold 3 is the upper threshold for giving an alarm. Threshold 4 is the upper threshold for stop moving of the TIP 8.

At this point, threshold 1, 2, 3 and 4 are configured with respect to each guide tube 24 in advance, because the shape and the length of guide tubes 24 are different each other. Furthermore, according to the insert distance of the TIP 8 into the guide tube 24, the contact area of the probe cable 7 and the guide tube 24 increases, and the drive torque that is a torque necessary for moving the TIP 8 and the probe cable in the guide tube 24 increases. Thus, threshold 1 and 2 are configured so as to increase according to insert distance into the each guide tube 24.

Furthermore, at the curved portion of the guide tube 24 under the reactor pressure vessel 32, the drive torque increases more rapidly than the vertical portion per unit distance. Thus, the width of threshold 1 and 2 at the curved portion are set more widely than the vertical portion (that is, the range between threshold 1 and 2 at the curved portion is greater than the range between threshold 1 and 2 at the vertical portion).

The way to set threshold 1, 2, 3 and 4 is described as follows. At first, Ta(x) is measured by moving the TIP8 at past traditional drive speed (Va(x)). Next, Tb(x) is measured by moving the TIP8 at Vb(x). At this point, Vb(x) is 10% faster than Va(x).

Generally, drive torque T increases according to drive speed V. This increase rate (r(x)) between drive torque T and drive speed V is described as formula (1).

$$Tb(x)\text{-}Ta(x)=r(x)\times(Vb(x)\text{-}Va(x))=r(x)\times(1.1\times Va(x)\text{-}Va(x))\cdots(1)$$

r(x) at each insert distance is calculated by formula (2) deformed from formula (1).

$$r(x)=10\times(Tb(x)\text{-}Ta(x))/Va(x)\cdots(2)$$

Thi(top) is upper limit drive torque at core top. And Thi(top) is set as 80% of the max torque of motor 4. Furthermore, Thi(top) is a value of threshold 1 at core top. Thi(top) is calculated by formula (3) deformed from formula (1).

$$Thi(top)=Ta(top)+r(top)\times(Vhi\text{-}Va(top))\cdots(3)$$

Va(top):past traditional drive speed at core top
Ta(top):drive torque when the TIP 8 moved at Va(top) at core top
r(top): increase rate of Ta(top) at core top
Vhi is a drive speed of Thi(top). Vhi is a drive speed at core top when the drive torque is Thi(top). Vhi is calculated by using formula (4).

$$Vhi=Va(top)+(Thi(top)\text{-}Ta(top))/r(top)\cdots(4)$$

Furthermore, Thi(x) is a drive speed when the TIP 8 moved at Vhi constantly at each insert distance. Threshold 1 is gained by smoothing Thi(x) at each insert distance. Thi(x) is calculated by formula (5)

$$Thi(x)=Ta(x)+r(x)\times(Vhi\text{-}Va(x))\cdots(5)$$

Tlo(top) is lower limit drive torque at core top. And Tlo(top) is set as 60% of the max torque of motor 4. Furthermore, Tlo(top) is a value of threshold 2 at core top. Tlo(top) is calculated by formula (6)

$$Vlo=Va(top)+(Tlo(top)\text{-}Ta(top))/r(top)\cdots(6)$$

Tlo(x) is a drive speed when the TIP 8 moved at Vlo constantly at each insert distance. Threshold 1 is gained by smoothing Tlo(x) at each insert distance. Tlo(x) is calculated by formula (7)

$$Tlo(x) = Ta(x) + r(x) \times (Vlo - Va(x)) \cdots (7)$$

Another way to set threshold 1, 2, 3 and 4 is described as follows. For example, the normal drive torque curve is measured with respect to each guide tube 24 along all insert distance in the normal status at plant routine checkup. This normal drive torque curve may be measured multiple times and averaged or smoothed. And the threshold 1 is gained by adding the predefined value to the normal drive torque at each insert distance, threshold 2 is gained by subtracting the predefined value from the normal drive torque at each insert distance.

Above mentioned normal drive torque curve is also gained by measuring the normal drive torque at the end point and the inlet point of the guide tube 24, and fitting these normal drive torque so as to draw smoothed curve.

And threshold 3 is set as 90 % of the max torque drive value of the motor 4, and threshold 4 is set as 95 % of the max torque drive value.

The scheduled drive speed processor 17a receives the aimed torque information 105 from the aimed torque DB 16a. Additionally, the scheduled drive speed processor 17a receives the previous drive speed and the previous drive torque as previous drive information 104 from drive information DB 15a. This previous drive speed is the drive speed at previous neutron monitoring, and this previous drive torque is the drive torque measured at previous neutron monitoring. The scheduled drive speed processor 17a compares the threshold 1, 2 and the previous drive torque, and sets the scheduled drive speed by increasing and decreasing from the previous drive speed.

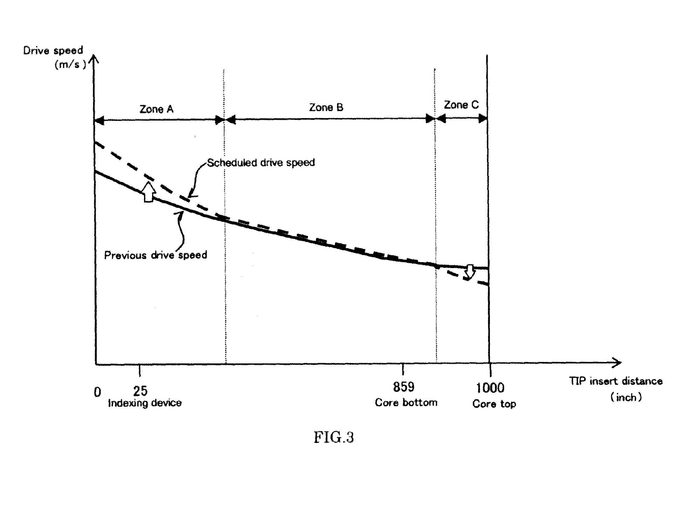

Processing carried out by the scheduled drive speed processor 17a is now described with reference to Figs. 2 and 3. For example, as shown Fig.2, at zone A, the previous drive torque is smaller than the threshold 2. Thus, the scheduled drive speed is set faster than previous drive speed as shown Fig.3.

And as shown Fig.2, at zone B, the previous drive torque is located between threshold 1 and 2. Thus, the scheduled drive speed is set as same as the previous drive speed as shown Fig.3.

Furthermore, as shown Fig.2, at zone C, the previous drive torque is larger than the threshold 1. Thus, the scheduled drive speed is set slower than previous drive speed as shown Fig.3.

At each guide tube 24, the all insert distance is separated into a number of minim intervals. And above mentioned scheduled drive speed is calculated at each minim interval. At each minim interval, the previous drive speed, threshold 1, and threshold 2 are considered constant value.

Increase and decrease range of the drive speed is calculated by using following formula (8) and (9).

$$?V = \{(t0 - t1)/t0\} \times V1 \times W \ldots (8)$$

$$V2 = V1 + ?V \ldots (9)$$

t1 : previous drive torque ?V: increase and decrease range
t0 : torque variable number W : weighting factor
V1 : previous drive speed V2: scheduled drive speed

At each minim interval, such as zone C, when the previous torque t1 is larger than threshold 1, the torque variable number t0 is configured as threshold 1. When the previous torque t1 is smaller than threshold 2, such as zone A, the torque variable number t0 is configured as threshold 2. When the previous torque t1 is smaller than threshold 1 and larger than threshold 2, such as zone B, the torque variable number t0 is configured as previous drive torque t1, and the scheduled drive speed is maintained at previous drive speed. The weighting factor W is the factor protecting rapid change of the scheduled drive speed, configured as 0<W<1.0, and adjusted as needed.

At each minim interval, the max drive torque value among the drive torque value measured in this minim interval, can be applied to the previous drive torque. By doing so, it is possible to improve safeness.

As shown Fig.1, The scheduled drive speed processor 17a calculates the scheduled drive speed at each minim intervals, and sends these scheduled drive speeds as the scheduled drive speed information 106 to the drive control unit 11. At this point, threshold 3 and 4 are added to this scheduled drive speed information 106.

The drive control unit 11 receives the scheduled drive speed information 106, and sends drive command 107 to the motor 4, and moves TIP 8 at the scheduled drive speed indicated in the scheduled drive speed information 106 at each insert position. At this time, the torque sensor 5 measures the drive torque, and sends this drive torque as the drive torque information 100 to the drive control unit 11 while TIP 8 is moving.

The drive control unit 11 receives the drive torque information 100, and compares the drive torque and threshold 3, 4. If the drive torque exceeds threshold 3, the drive control unit 11 sends the alarm signal to the process calculation machine 13 or TIP maintenance terminal 14 (not shown), and the process calculation machine 13 or TIP maintenance terminal 14 signals an alarm.

If the drive torque exceeds threshold 4, the drive control unit 11 stop moving the TIP 8, and reverses the motor 4 and retrieves the TIP 8 by predefined length, and insert again at slower drive speed. If the drive torque exceeds threshold 4 again, the drive control unit 11 withdraws the TIP 8 again, and inserts the TIP 8 at further slower drive speed. When the drive torque continues to exceed threshold 4 at predefined slower speed, the drive control unit 11 stops driving the motor 4.

Besides this, if the drive torque exceeds threshold 4, the drive control unit 11 stops moving the TIP 8, and withdraws the TIP 8, and inserts again at same drive speed. If the drive torque underruns threshold 4, the drive control unit 11 continues moving the TIP 8. If the drive torque exceeds threshold 4 again, the drive control unit 11 inserts the TIP 8 again at same drive speed. When the drive torque exceeds threshold 4 at predefined times, the drive control unit 11 stop driving the motor 4. In this modification, the drive control unit 11 can inserts the TIP 8 more quickly. Above inserting formula can be carried out at not only during inserting the TIP 8 into the guide tube 24 but also during drawing the TIP 8 from the guide tube 24.

Furthermore, the drive control unit 11 homologizes the drive speed and the drive torque at each insert position by using the probe position signal 101, the drive torque information 100 at current neutron monitoring. And the drive control unit 11 sends this information as the current drive information 103 to the drive information DB 15a. The current drive information 103 memorize in the drive information DB 15a is used for next calculation of the scheduled drive speed.

Additionally, the drive information DB 15a and 15b update each other by sending and receiving the synchronizing signal 110 that indicates drive information so far. Furthermore, it is possible to select normal one within the process calculation machine 13 and/or the TIP maintenance terminal 14 by detecting the break of synchronizing signal 110 or bad condition of other one.

In this embodiment, it is possible to optimize the drive speed, and measure neutron flux safely and fast by calculating the scheduled drive speed so as to set the drive torque between the threshold 1 and 2. And when the drive torque exceeds the threshold 4, it is possible to continue the neutron monitoring by inserting the TIP 8 again.

Additionally, this embodiment may be modified as below. At each minim interval, the averaged drive torque value among the drive torque value measured in this minim interval may be applied to the previous drive torque. In this modification, it is possible to prevent the control incapability and control more stably.

[Second embodiment]

This embodiment differs from the first embodiment in that the scheduled drive speed processor 17a, 17b calculates the scheduled drive speed by using an aimed torque curve.

This aimed torque curve is calculated just like above threshold 1 and 2. Tmid(top) is aimed drive torque at core top. And Tmid(top) is set as 70% of the max torque of motor 4. Tmid(top) is calculated by formula (10)

$$Vmid = Va(top) + (Tmid(top) - Ta(top))/r(top) \cdots (10)$$

Tmid (x) is a drive speed when the TIP 8 moved at Vmid constantly at each insert distance. The aimed drive torque 1 is gained by smoothing Tmid(x) at each insert distance. Tmid(x) is calculated by formula (11)

$$Tmid(x) = Ta(x) + r(x) \times (Vmid - Va(x)) \cdots (11)$$

The normal drive torque curve measured with respect to each guide tube 24 along all insert distance in the normal status at plant routine checkup is applied to the aimed torque curve. This aimed torque curve is stored in the aimed torque DB 16a, 16b.

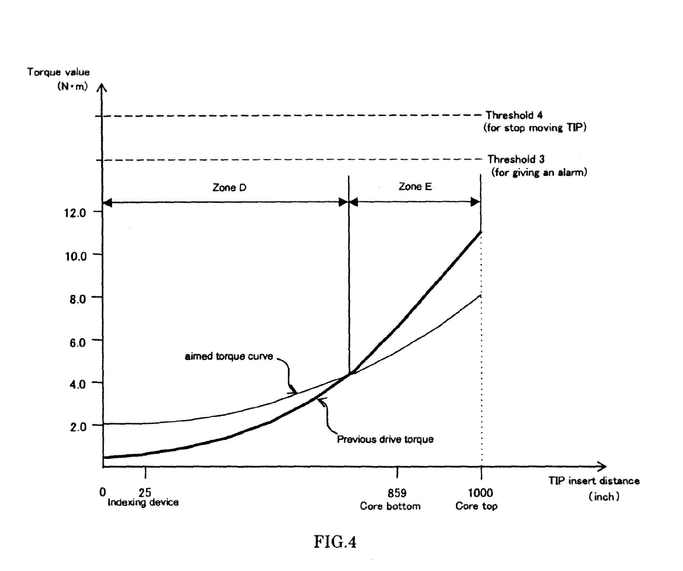

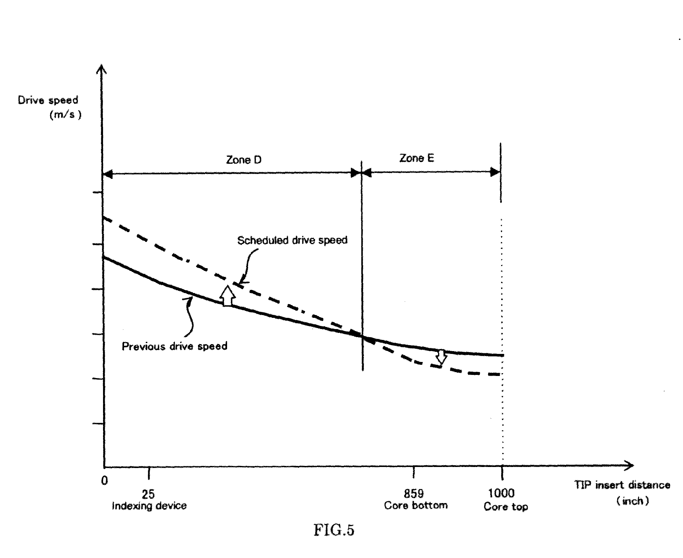

As shown Fig.4, at zone D, the previous drive torque is smaller than the aimed torque curve. Thus, the scheduled drive speed is set faster than previous drive speed as shown Fig.5.

And as shown Fig.4, at zone E, the previous drive torque is larger than the aimed torque curve. Thus, the scheduled drive speed is set slower than previous drive speed as shown Fig.5.

Increase and decrease range of the drive speed is calculated by above formulae (8) and (9). And the torque variable number t0 is configured as the value of the aimed torque curve at each minim interval.

In this embodiment, it is possible to control the TIP 8 more safely and fast by calculating the scheduled drive speed so as to bring the drive torque to the aimed torque curve.

[Third embodiment]

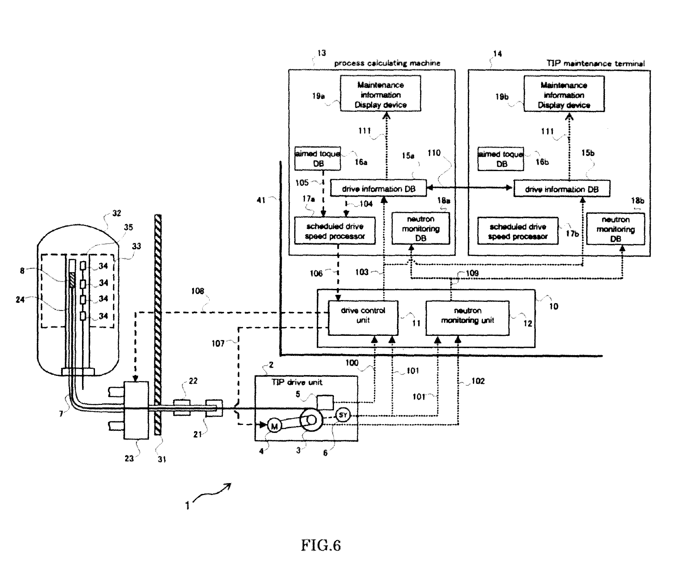

Figure 6 is a block schematic diagram illustrating a TIP monitoring system according to third embodiment of the invention. This embodiment differs from the first embodiment in that TIP monitoring system 1 additionally has a maintenance information display device 19a, b in the process calculating machine 13 and TIP maintenance terminal 14 respectively. The maintenance information display device 19a, b are connected to the drive information DB 15a, b respectively so as to receive a maintenance information signal 111.

The maintenance information display device 19a receives the maintenance information signal 111 from the drive information DB 15a. This maintenance information signal 111 indicates past multiple drive torque records of each guide tube 24.

The maintenance information display device 19a calculates a predicted drive torque of next time neutron measurement. For example, this predicted drive torque is calculated by linear prediction of past multiple drive torque at each inset distance.

When the predicted drive torque exceeds the threshold 4, the maintenance information display device 19a displays maintenance information by using a LCD monitor or a projector. For example, maintenance information includes the guide tube 24 and insertion distance where the predicted drive torque exceeds the threshold 4. Additionally, displaying this information just after moving the TIP 8 at each guide tube 24, it is able to maintenance the TIP monitoring system 1 promptly.

In this embodiment, it is possible to control the TIP 8 more safely and quickly by calculating the scheduled drive speed so as to bring the drive torque to the aimed torque curve.

The above described embodiments can be modified in various different ways as pointed out below. At Pressurized Water Reactor (PWR) power plant, fixed neutron sensors are provided at outer periphery of the reactor as substitute for LPRMs 34. Thus, above mentioned TIP monitoring system 1 is able to be applied to the PWR power plant as a traveling reactor power monitoring system.

Furthermore, at some PWR power plant, guide tubes 24 penetrates upper portion of the reactor pressure vessel, and the traveling probe moves to the core bottom form the core top. In this case, drive torque increases according to insert distance to the core bottom. Thus threshold 1, 2 and aimed torque curve are defined to increase according to insert distance to the core bottom.

The traveling power monitoring system can connect a gamma thermo meter as the traveling probe. This gamma thermo meter can measure gamma ray in the reactor core during moving. In this case, the traveling power monitoring system is able to measure gamma ray as reactor power.

Additionally, scheduled drive speed processor 17a, 17b are able to use not only previous drive information 104 but also the forepast drive information that indicates the forepast drive speed and the forepast drive torque. For example, the forepast drive information includes the before last time drive speed and the drive torque, the average value of the previous and the before last time drive speed and drive torque end so on.

Furthermore, the drive information DB 15a, 15b are able to store the forepast drive information that is previously measured at other power plant. By doing so, it is possible to optimize the drive speed without measuring and storing the forepast drive information of the plant under operation.

Additionally, it does not need to calculate the scheduled drive speed at every minim interval at one guide tube 24. The scheduled drive speed processor 17a, 17b can calculate the scheduled drive speed at the predefined insert position. For example, the scheduled drive speed processor 17a, 17b can calculate the scheduled drive at intervals of 10 or 20 inch in one guide tube 24.

In this modification, the aimed torque DB 16a, 16b memorize threshold 1, 2 or aimed torque threshold at the predefined insert position at least. And the drive information DB 15a, 15b stores the drive information at the predefined insertion position at least. At this point, the drive torque changes rapidly at the curved portion of the guide tube 24 compared to other potion. Thus, it is preferred to store above threshold 1, 2, aimed torque threshold and the drive information at the curved portion at least.

**Claims**

1. A traveling reactor power monitoring system (1) arranged for a nuclear reactor, and comprising:

   a probe cable (7);
   a traveling probe (8) connected to an edge of the probe cable (7);

a storage reel (3) configured to storage the probe cable (7);

a motor (4) configured to feed the probe cable (7) from the storage reel (3) and spool the probe cable (7) onto the storage reel (3);

a drive control unit (11) configured to rotate the motor (4) and to move the traveling probe (8) at a scheduled drive speed at each insert position in a guide tube (24) provided in the nuclear reactor;

a torque sensor (5) configured to measure the drive torque which is the torque necessary for moving the traveling probe (8) and the probe cable (7) in the guide tube (24) during the traveling probe moving;

an aimed torque data base (16a, 16b) storing a first threshold arranged to be used for decreasing the scheduled drive speed and a second threshold arranged to be used for increasing the scheduled drive speed at least at a predefined insert position in the guide tube (24);

a drive information data base (15a, 15b) arranged for storing the drive torque (100) received from the torque sensor (5) and the drive speed at which the drive control unit (11) moved the traveling probe as a drive information; and

a scheduled drive speed processor (17a, 17b) configured to set the scheduled drive speed faster than the previous drive speed when the previous drive torque is smaller than the second threshold, and to set the scheduled drive speed slower than the previous drive speed when the previous drive torque is larger than the first threshold at each predefined insert position.

2. The traveling reactor power monitoring system (1) of claim 1, the aimed torque data base (16a, 16b) storing an aimed torque threshold at said predefined insert position in the guide tube (24); the scheduled drive speed processor (17a, 17b) configured to set the scheduled drive speed faster than the previous drive speed when the previous drive torque is smaller than the aimed torque threshold, and set the scheduled drive speed slower than the previous drive speed when the previous drive torque is larger than the aimed torque threshold at each predefined insert position.

3. The traveling reactor power monitoring system (1) of claim 1 or 2, wherein:

the aimed torque data base (16a, 16b) further memorizes a third threshold, and
the drive control unit (11) is arranged to give an alarm when the drive torque exceeds the third threshold.

4. The traveling reactor power monitoring system (1) of claim 1 or 2, wherein:

the aimed torque data base (16a, 16b) further memorizes a forth threshold, and
the drive control unit (11) is arranged to stop the moving of the traveling probe and to move it again when the drive torque exceeds the forth threshold.

5. The traveling reactor power monitoring system (1) of claim 1 or 2 further comprising;
a process calculating machine (13) having a first scheduled drive speed processor (17a);
a TIP maintenance terminal (14) having a second scheduled drive speed processor (17b);
wherein one of the first (17a) and second scheduled drive speed processor (17b) is arranged to calculate the scheduled drive speed.

6. The traveling reactor power monitoring system (1) of claim 5,
wherein the process calculating machine (13) and the TIP maintenance terminal (14) have a drive information data base (15a, 15b) respectively, aid drive information data bases (15a, 15b) being arranged to update each other by sending and receiving a synchronizing signal that indicates the drive information so far.

7. The traveling reactor power monitoring system (1) of claim 1 or 2, wherein:

the scheduled drive speed processor (17a, 17b) is arranged to separate an insert distance into a number of minim intervals, and to calculate the scheduled drive speed at each of said minim intervals, and to apply at each minim interval the max drive torque value among the drive torque values measured in each minim interval as previous drive torque value.

8. The traveling reactor power monitoring system (1) of claim 1 or 2, wherein:

the scheduled drive speed processor (17a, 17b) is arranged to separate the insert distance into a number of minim intervals, and to calculate the scheduled drive speed at each of said minim intervals, and to apply at each minim interval the averaged drive torque value among the drive torque values measured in each minim interval as previous drive torque value.

9. A method of monitoring the power of a nuclear reactor with a traveling probe (8) that is connected to an edge of a probe cable (7), the method being carried out by a traveling reactor power monitoring system (1) according to claims 1 to 8 and comprising:

measuring at a previous neutron monitoring a previous drive torque that is the torque necessary for moving the traveling probe (8) and the probe cable (7) in the guide tube (24) by a torque sensor;
storing the previous drive torque and the previous drive speed of the traveling probe at the previous neutron monitoring in a drive information data base (15a, 15b); and
calculating a scheduled drive speed which is faster than the previous drive speed when the previous drive torque is smaller than a second threshold to be used for increasing the scheduled drive speed, and which is slower than the previous drive speed when the previous drive torque is larger than a first threshold to be used for increasing the scheduled drive speed at each predefined insert position by a scheduled drive speed processor (17a, 17b); and
moving the traveling probe (8) in the guide tube (24) at the scheduled drive speed calculated by the scheduled drive speed processor (17a, 17b).

**Patentansprüche**

1. System (1) mit verfahrbarer Sonde zur Leistungsüberwachung eines Reaktors, vorgesehen für einen Kernreaktor, wobei das System umfasst:

ein Sondenkabel (7),
eine mit einem Ende des Sondenkabels (7) verbundene verfahrbare Sonde (8),
eine Aufbewahrungsrolle (3), die zum Aufbewahren des Sondenkabels (7) konfiguriert ist,
einen Motor (4), der zum Zuführen des Sondenkabels (7) von der Aufbewahrungsrolle (3) und zum Aufrollen des Sondenkabels (7) auf die Aufbewahrungsrolle (3) konfiguriert ist,
eine Antriebssteuereinheit (11), die zum Drehen des Motors (4) und zum Bewegen der verfahrbaren Sonde (8) mit einer Soll-Antriebsgeschwindigkeit an jeder Einfahrposition in einem im Kernreaktor vorgesehenen Führungsrohr (24) konfiguriert ist,
einen Drehmomentsensor (5), der zum Messen des Antriebsdrehmoments konfiguriert ist, welches das zum Bewegen der verfahrbaren Sonde (8) und des Sondenkabels (7) in dem Führungsrohr (24) während der Bewegung der verfahrbaren Sonde notwendige Drehmoment ist,
eine Datenbank für Soll-Drehmomente (16a, 16b), welche eine erste Schwelle, welche ausgebildet ist, zum Verringern der Soll-Antriebsgeschwindigkeit verwendet zu werden, und eine zweite Schwelle, welche ausgebildet ist, zum Erhöhen der Soll-Antriebsgeschwindigkeit mindestens an einer vordefinierten Einfahrposition in dem Führungsrohr (24) verwendet zu werden, speichert,
eine Datenbank für Antriebsinformationen (15a, 15b), welche ausgebildet ist, das vom Drehmomentsensor (5) empfangene Antriebsdrehmoment (100) und die Antriebsgeschwindigkeit, mit welcher die Antriebssteuereinheit (11) die verfahrbare Sonde (8) bewegt hat, als Antriebsinformation zu speichern, und
einen Prozessor für die Soll-Antriebsgeschwindigkeit (17a, 17b), der zum Einstellen der Soll-Antriebsgeschwindigkeit auf einen höheren Wert als die vorherige Antriebsgeschwindigkeit, wenn das vorherige Antriebsdrehmoment kleiner als die zweite Schwelle ist, und zum Einstellen der Soll-Antriebsgeschwindigkeit an jeder vordefinierten Einfahrposition auf einen niedrigeren Wert als die vorherige Antriebsgeschwindigkeit, wenn das vorherige Antriebsdrehmoment größer als die erste Schwelle ist, konfiguriert ist.

2. System (1) mit verfahrbarer Sonde zur Leistungsüberwachung eines Reaktors nach Anspruch 1, wobei
die Datenbank für Soll-Drehmomente (16a, 16b) eine Soll-Drehmomentschwelle an der vordefinierten Einfahrposition in dem Führungsrohr (24) speichert,
der Prozessor für die Soll-Antriebsgeschwindigkeit (17a, 17b) zum Einstellen der Soll-Antriebsgeschwindigkeit auf einen höheren Wert als die vorherige Antriebsgeschwindigkeit, wenn das vorherige Antriebsdrehmoment kleiner als die Soll-Drehmomentschwelle ist, und zum Einstellen der Soll-Antriebsgeschwindigkeit an jeder vordefinierten Einfahrposition auf einen niedrigeren Wert als die vorherige Antriebsgeschwindigkeit, wenn das vorherige Antriebsdrehmoment größer als die Soll-Drehmomentschwelle ist, konfiguriert ist.

3. System (1) mit verfahrbarer Sonde zur Leistungsüberwachung eines Reaktors nach Anspruch 1 oder 2, wobei:

die Datenbank für Soll-Drehmomente (16a, 16b) ferner eine dritte Schwelle speichert und
die Antriebssteuereinheit (11) ausgebildet ist, einen Alarm auszulösen, wenn das Antriebsdrehmoment die dritte Schwelle überschreitet.

**4.** System (1) mit verfahrbarer Sonde zur Leistungsüberwachung eines Reaktors nach Anspruch 1 oder 2, wobei:

die Datenbank für Soll-Drehmomente (16a, 16b) ferner eine vierte Schwelle speichert und
die Antriebssteuereinheit (11) ausgebildet ist, die Bewegung der verfahrbaren Sonde anzuhalten und sie wieder zu bewegen, wenn das Antriebsdrehmoment die vierte Schwelle überschreitet.

**5.** System (1) mit verfahrbarer Sonde zur Leistungsüberwachung eines Reaktors nach Anspruch 1 oder 2, wobei das System ferner umfasst:

eine Prozessberechnungseinrichtung (13) mit einem ersten Prozessor für die Soll-Antriebsgeschwindigkeit (17a),
eine TIP-Wartungseinrichtung (14) mit einem zweiten Prozessor für die Soll-Antriebsgeschwindigkeit (17b),
wobei der erste (17a) oder der zweite (17b) Prozessor für die Soll-Antriebsgeschwindigkeit ausgebildet ist, die Soll-Antriebsgeschwindigkeit zu berechnen.

**6.** System (1) mit verfahrbarer Sonde zur Leistungsüberwachung eines Reaktors nach Anspruch 5,
wobei die Prozessberechnungseinrichtung (13) und die TIP-Wartungseinrichtung (14) jeweils eine Datenbank für Antriebsinformationen (15a, 15b) aufweisen, wobei die Datenbänke für Antriebsinformationen (15a, 15b) ausgebildet sind, sich gegenseitig auf neuesten Stand zu bringen, indem ein Synchronisiersignal, gesendet und empfangen wird, das die bisherigen Antriebsinformationen anzeigt.

**7.** System (1) mit verfahrbarer Sonde zur Leistungsüberwachung eines Reaktors nach Anspruch 1 oder 2, wobei:

der Prozessor für die Soll-Antriebsgeschwindigkeit (17a, 17b) ausgebildet ist, eine Einfahrentfernung in eine Anzahl von kleinen Intervallen aufzutrennen und die Soll-Antriebsgeschwindigkeit an jedem der kleinen Intervalle zu berechnen und an jedem kleinen Intervall den maximalen Antriebsdrehmomentswert unter den in jedem kleinen Intervall gemessenen Antriebsdrehmomentswerten als vorherigen Antriebsdrehmomentswert anzuwenden.

**8.** System (1) mit verfahrbarer Sonde zur Leistungsüberwachung eines Reaktors nach Anspruch 1 oder 2, wobei:

der Prozessor für die Soll-Antriebsgeschwindigkeit (17a, 17b) ausgebildet ist, die Einfahrentfernung in eine Anzahl von kleinen Intervallen aufzutrennen und die Soll-Antriebsgeschwindigkeit an jedem der kleinen Intervalle zu berechnen und an jedem kleinen Intervall den durchschnittlichen Antriebsdrehmomentswert unter den in jedem kleinen Intervall gemessenen Antriebsdrehmomentswerten als vorherigen Antriebsdrehmomentswert anzuwenden.

**9.** Verfahren zur Leistungsüberwachung eines Kernreaktors mit einer verfahrbaren Sonde (8), die mit einem Ende eines Sondenkabels (7) verbunden ist, wobei das Verfahren durch ein System (1) mit verfahrbarer Sonde zur Leistungsüberwachung eines Reaktors nach den Ansprüchen 1 bis 8 ausgeführt wird, und wobei das Verfahren umfasst:

bei einer vorherigen Neutronüberwachung Messen eines vorherigen Antriebsdrehmoments, das das zum Bewegen der verfahrbaren Sonde (8) und des Sondenkabels (7) in dem Führungsrohr (24) durch einen Drehmomentsensor notwendige Drehmoment ist,
Speichern des vorherigen Antriebsdrehmoments und der vorherigen Antriebsgeschwindigkeit der verfahrbaren Sonde bei der vorherigen Neutronüberwachung in einer Datenbank für Antriebsinformationen (15a, 15b), und
Berechnen einer Soll-Antriebsgeschwindigkeit, welche einen höheren Wert als die vorherige Antriebsgeschwindigkeit aufweist, wenn das vorherige Antriebsdrehmoment kleiner als eine zweite Schwelle ist, die zum Erhöhen der Soll-Antriebsgeschwindigkeit verwendet wird, und welche einen niedrigeren Wert als die vorherige Antriebsgeschwindigkeit aufweist, wenn das vorherige Antriebsdrehmoment größer als eine erste Schwelle ist, die zum Erhöhen der Soll-Antriebsgeschwindigkeit an jeder vordefinierten Einfahrposition durch einen Prozessor für die Soll-Antriebsgeschwindigkeit (17a, 17b) verwendet wird, und
Bewegen der verfahrbaren Sonde (8) in dem Führungsrohr (24) mit der von dem Prozessor für die Soll-Antriebsgeschwindigkeit (17a, 17b) berechneten Soll-Antriebsgeschwindigkeit.

**Revendications**

1. Système de surveillance de la puissance d'un réacteur (1) par une sonde mobile agencée pour un réacteur nucléaire, et comprenant :

   un câble de sonde (7) ;
   une sonde mobile (8) raccordée à un bord du câble de sonde (7) ;
   un rouleau de stockage (3) configuré pour stocker le câble de sonde (7) ;
   un moteur (4) configuré pour fournir le câble de sonde (7) depuis le rouleau de stockage (3) et pour enrouler le câble de sonde (7) sur le rouleau de stockage (3) ;
   une unité de commande d'entraînement (11) configurée pour faire tourner le moteur (4) et pour déplacer la sonde mobile (8) à une vitesse d'entraînement programmée dans chaque position d'insertion dans un tube de guidage (24) prévu dans le réacteur nucléaire ;
   un capteur de couple (5) configuré pour mesurer le couple d'entraînement qui est le couple nécessaire pour déplacer la sonde mobile (8) et le câble de sonde (7) dans le tube de guidage (24) pendant le déplacement de la sonde mobile ;
   une base de données de couple visé (16a, 16b) contenant un premier seuil agencé pour être utilisé pour diminuer la vitesse d'entraînement programmée et un deuxième seuil agencé pour être utilisé pour augmenter la vitesse d'entraînement programmée au moins dans une position d'insertion prédéfinie dans le tube de guidage (24) ;
   une base de données d'informations d'entraînement (15a, 15b) agencée pour mémoriser le couple d'entraînement (100) reçu depuis le capteur de couple (5) et la vitesse d'entraînement à laquelle l'unité de commande d'entraînement (11) a déplacé la sonde mobile en tant qu'informations d'entraînement ; et
   un processeur de vitesse d'entraînement programmée (17a, 17b) configuré pour régler la vitesse d'entraînement programmée plus rapide que la vitesse d'entraînement précédente lorsque le couple d'entraînement précédent est inférieur au deuxième seuil et pour régler la vitesse d'entraînement programmée plus lente que la vitesse d'entraînement précédente lorsque le couple d'entraînement précédent est supérieur au premier seuil dans chaque position d'insertion prédéfinie.

2. Système de surveillance de la puissance d'un réacteur (1) par une sonde mobile selon la revendication 1,
   la base de données de couple visé (16a, 16b) contenant un seuil de couple visé dans la disposition d'insertion prédéfinie dans le tube de guidage (24) ;
   le processeur de vitesse d'entraînement programmée (17a, 17b) étant configuré pour régler la vitesse d'entraînement programmée plus rapide que la vitesse d'entraînement précédente lorsque le couple d'entraînement précédent est inférieur au seuil de couple visé et pour régler la vitesse d'entraînement programmée plus lente que la vitesse d'entraînement précédente lorsque le couple d'entraînement précédent est supérieur au seuil de couple visé dans chaque position d'insertion prédéfinie.

3. Système de surveillance de la puissance d'un réacteur (1) par une sonde mobile selon la revendication 1 ou 2, dans lequel :

   la base de données de couple visé (16a, 16b) contient en outre un troisième seuil, et
   l'unité de commande d'entraînement (11) est agencée pour donner une alerte lorsque le couple d'entraînement dépasse le troisième seuil.

4. Système de surveillance de la puissance d'un réacteur (1) par une sonde mobile selon la revendication 1 ou 2, dans lequel :

   la base de données de couple visé (16a, 16b) contient en outre un quatrième seuil, et
   l'unité de commande d'entraînement (11) est agencée pour arrêter le déplacement de la sonde mobile et pour la déplacer à nouveau lorsque le couple d'entraînement dépasse le quatrième seuil.

5. Système de surveillance de la puissance d'un réacteur (1) par une sonde mobile selon la revendication 1 ou 2, comprenant en outre :

   une machine de calcul de processus (13) comportant un premier processeur de vitesse d'entraînement programmée (17a) ;

un terminal de maintenance de TIP (Sonde interne transversale) (14) comportant un second processeur de vitesse d'entraînement programmée (17b) ;

dans lequel un du premier (17a) et du second processeur de vitesse d'entraînement programmée (17b) est agencé pour calculer la vitesse d'entraînement programmée.

**6.** Système de surveillance de la puissance d'un réacteur (1) par une sonde mobile selon la revendication 5, dans lequel la machine de calcul de processus (13) et le terminal de maintenance de TIP comportent respectivement une base de données d'informations d'entraînement (15a, 15b) agencées pour se mettre à jour mutuellement en envoyant et en recevant un signal de synchronisation qui indique les informations d'entraînement jusqu'à présent.

**7.** Système de surveillance de la puissance d'un réacteur (1) par une sonde mobile selon la revendication 1 ou 2, dans lequel :

le processeur de vitesse d'entraînement programmée (17a, 17b) est agencé pour séparer la distance d'insertion en un certain nombre d'intervalles minimums et pour calculer la vitesse d'entraînement programmée à chacun desdits intervalles minimums et pour appliquer à chaque intervalle minimum la valeur de couple d'entraînement maximale parmi les valeurs de couple d'entraînement mesurées dans chaque intervalle minimum en tant que valeur de couple d'entraînement précédente.

**8.** Système de surveillance de la puissance d'un réacteur (1) par une sonde mobile selon la revendication 1 ou 2, dans lequel :

le processeur de vitesse d'entraînement programmée (17a, 17b) est agencé pour séparer la distance d'insertion en un certain nombre d'intervalles minimums et pour calculer la vitesse d'entraînement programmée à chacun desdits intervalles minimums et pour appliquer à chaque intervalle minimum la valeur de couple d'entraînement moyennée parmi les valeurs de couple d'entraînement mesurées dans chaque intervalle minimum, en tant que valeur de couple d'entraînement précédente.

**9.** Procédé de surveillance de la puissance d'un réacteur nucléaire au moyen d'une sonde mobile (8) qui est raccordée à un bord d'un câble de sonde (7), le procédé étant exécuté par un système de surveillance de la puissance d'un réacteur (1) au moyen d'une sonde mobile selon les revendications 1 à 8 et comprenant :

la mesure, lors d'un contrôle de neutrons précédent, d'un couple d'entraînement précédent, qui est le couple nécessaire pour déplacer la sonde mobile (8) et le câble de sonde (7) dans le tube de guidage (24) au moyen d'un capteur de couple ;

la mémorisation, dans une base de données d'informations d'entraînement (15a, 15b), du couple d'entraînement précédent et de la vitesse d'entraînement précédente de la sonde mobile lors du contrôle de neutrons précédent ; et

le calcul d'une vitesse d'entraînement programmée qui est plus rapide que la vitesse d'entraînement précédente lorsque le couple d'entraînement précédent est inférieur au deuxième seuil, pour être utilisée pour augmenter la vitesse d'entraînement programmée, et qui est plus lente que la vitesse d'entraînement précédente lorsque le couple d'entraînement précédent est supérieur à un premier seuil, pour être utilisée pour augmenter la vitesse d'entraînement programmée à chaque position d'insertion prédéfinie au moyen d'un processeur de vitesse d'entraînement programmée (17a, 17b) ; et

le déplacement de la sonde mobile (8) dans le tube de guidage (24) à la vitesse d'entraînement programmée calculée par le processeur de vitesse d'entraînement programmée (17a, 17b).

FIG.1

FIG.2

FIG.3

FIG.4

FIG.5

FIG.6

**EP 2 618 334 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012008416 A
- JP 2002071483 A
- JP 2006145417 A